# EUROPEAN PATENT APPLICATION

(11) **EP 4 797 224 A1**
(43) Date of publication of application: **26.08.2026**
(21) Application number: 25836269.8
(22) Date of filing: 30.06.2025
(51) Int. Cl.: G06V 20/10

(54) **NETWORK MODEL, CONSTRUCTION METHOD, AND METHOD AND SYSTEM FOR NONDESTRUCTIVE GENDER IDENTIFICATION OF EGGS**

(30) Priority: 09.07.2024 CN 202410909955
(71) Applicant: Nanjing Starhelix Intelligent Co., Ltd., Nanjing, Jiangsu 211899 (CN)
(72) Inventor: HUANG, Junxian, Beijing 100816 (CN); GAO, Jianfeng, Jiamusi, Heilongjiang 154323 (CN)
(74) Representative: Meyer-Dulheuer MD Legal Patentanwälte PartG mbB
(86) International application number: PCT/CN2025/105973
(87) International publication number: WO 2026/012223

(57) **Abstract**

The present invention discloses a network model, a construction method Therefor, and a non-destructive identification method and system for egg sexes. The network model for identifying egg sexes includes a first filtering layer capable of selecting spectral image bands for features of fertilized eggs; and a second filtering layer capable of further extracting image features and channel features of the fertilized eggs. The present invention can directly utilize original image spectra as output, eliminating the disadvantages of wasting potentially useful information of an average spectrum method and addressing the problems of slow convergence, a large quantity of parameters, and insufficient precision of deep learning in handling high-dimensional hyperspectral images. As a result, it enables sex determination on eggs on day 10 of incubation.

## Description

### TECHNICAL FIELD

The present invention relates to the technical field of egg sex identification, in particular to a non-destructive identification method and system for egg sexes using a neural network algorithm.

### BACKGROUND

Currently, there are mainly the following methods for early-stage embryonic sex determination on the eggs:
I. An identification method based on volatile organic compounds (VOCs): this method is to analyze gases released from eggshells for determination. However, it requires a relatively long time to collect gas samples, making it unsuitable for large-scale use. Although chemical ionization and other recent technologies have been proposed for rapid gas component detection, accuracy and repeatability of their models remain poorly understood, and their repeatability is even unknown.
II. An identification method based on polymerase chain reaction (PCR): PCR is a routinely used technology for sex determination in bird field researches, which can amplify sex-specific genes located on the Z and W sex chromosomes. This method primarily involves three steps: DNA extraction, PCR, and gel electrophoresis. After PCR products are electrophoresed by agarose gel, there are apparent differences between males and females, allowing for embryo classification based on a result. However, this method is not only costly, requiring specialized devices and precise laboratory procedures, but also time-consuming, making it unsuitable for high-volume application to practical scenes.
III. An identification method based on Raman spectroscopy: this method involves creating a small window in an eggshell to analyze blood spectra in extraembryonic vessels with the Raman spectroscopy, achieving identification accuracy of 90% by day 3.5 of incubation. However, invasive detection will pose a risk of infection, and both eggshell windowing and subsequent sealing will increase an identification cost, making it unsuitable for parallelized application in a large-scale hatchery.

### SUMMARY

In view of the existing problems in a method for detecting egg sexes, the present invention is proposed.

Thus, one of the problems to be solved by the invention is how to provide a network model capable of efficiently filtering noise.

To solve the above technical problems, the invention provides the following technical solutions: a network model, including an input layer, to which a first filtering layer capable of selecting feature bands, and a second filtering layer capable of further extracting image features and channel features and selecting the channel features.

As a preferred solution of the network model of the invention, the first filtering layer captures information about a potential inter-channel correlation in an average spectrum through a channel attention mechanism, assigning a greater weight to an important channel.

As a preferred solution of the network model of the invention, the first filtering layer is capable of performing following processing: downsampling each channel of the spectral image into a mean value; obtaining multi-dimensional vectors by performing first-order and second-order derivative operations; obtaining a weight for each channel by summing the obtained vectors; and multiplying the weight with each channel of an original image with containing an importance feature of the channel in output data.

As a preferred solution of the network model of the invention, the first filtering layer is a squeeze-and-excitation (SE) layer.

As a preferred solution of the network model of the invention, the improvement operation is performed on the SE layer.

As a preferred solution of the network model of the invention, the improvement operation involves the first-order and second-order derivative operations, specifically, $D {1}_{i} = \left\{\begin{matrix}{AvgP}_{i + 1} - {AvgP}_{i} & \left(i=0,1…,n-1\right) \\ 0 & \left(i=n\right)\end{matrix}\right.$ $D {2}_{i} = \left\{\begin{matrix}D {1}_{i + 1} - D {1}_{i} & \left(i=0,1…,n-2\right) \\ 0 & \left(i=n-1,n\right)\end{matrix}\right.$
wherein *AvgPᵢ* is a mean value of an *i*^{th} channel image; *n* is a number of channels of the spectral image; *D*1*ᵢ* is a first-order derivative corresponding to an *i*^{th} channel; and *D*2*ᵢ* is a second-order derivative corresponding to the *i*^{th} channel.

As a preferred solution of the network model of the invention, the second filtering layer is capable of further extracting image texture information and channel information, and reducing the channel features.

As a preferred solution of the network model of the invention, the second filtering layer is capable of performing following processing: reducing a channel dimension by means of pointwise convolution; extracting a feature inside each channel by means of depthwise convolution on the channel with the reduced dimension; and fusing inter-channel information by means of another pointwise convolution to obtain an output image of the channel with the reduced dimension.

As a preferred solution of the network model of the invention, the second filtering layer is a depthwise separable convolution layer.

Another problem to be solved by the invention is how to provide a method for constructing a network model capable of efficiently filtering noise.

To solve the above technical problem, the invention provides the following technical solution: a method for constructing a network model for identifying egg sexes includes: selecting image feature bands of fertilized eggs; and further extracting image features and channel features of the fertilized eggs.

As a preferred solution of the network model of the invention, the selecting image feature bands of fertilized eggs includes: downsampling each channel of the spectral image into a mean value; obtaining multi-dimensional vectors by performing an improvement operation; obtaining a weight for each channel by summing the obtained vectors; and multiplying the weight with each channel of an original spectral image with containing an importance feature of the channel in output data.

As a preferred solution of the network model of the invention, the selecting image feature bands of fertilized eggs is enabled by means of an SE layer.

As a preferred solution of the network model of the invention, the improvement operation is performed on the SE layer.

As a preferred solution of the network model of the invention, the improvement operation involves first-order and second-order derivative operations, specifically, $D {1}_{i} = \left\{\begin{matrix}{AvgP}_{i + 1} - {AvgP}_{i} & \left(i=0,1…,n-1\right) \\ 0 & \left(i=n\right)\end{matrix}\right.$ $D {2}_{i} = \left\{\begin{matrix}D {1}_{i + 1} - D {1}_{i} & \left(i=0,1…,n-2\right) \\ 0 & \left(i=n-1,n\right)\end{matrix}\right.$
wherein *AvgPᵢ* is a mean value of an *i*^{th} channel image; *n* is a number of channels of the spectral image; *D*1*ᵢ* is a first-order derivative corresponding to an *i*^{th} channel; and *D*2*ᵢ* is a second-order derivative corresponding to the *i*^{th} channel.

As a preferred solution of the network model of the invention, the further extracting image features and channel features of the fertilized eggs and selecting the channel features includes: reducing a channel dimension by means of pointwise convolution; extracting a feature inside each channel by means of depthwise convolution on the channel with the reduced dimension; and fusing inter-channel information by means of another pointwise convolution to obtain an output image of the channel with the reduced dimension.

As a preferred solution of the network model of the invention, the further extracting image features and channel features of the fertilized eggs is enabled by means of the depthwise separable convolution layer.

As a preferred solution of the network model of the invention, the network model is trained and evaluated.

As a preferred solution of the network model of the invention, the training includes: fitting an optimization model using a loss function, $criterion = {W}_{1} CrossEntropyLoss \left(\right) + {W}_{2} Waste _ Ratio + {W}_{3} Kappa + {W}_{4} {F}_{1}$ $CrossEntropyLoss = - \frac{1}{N} {Σ}_{i = 1}^{N} {Σ}_{j = 1}^{C} {y}_{ij} log \left({\hat{y}}_{ij}\right)$ $WasteRatio = \left({P}_{f}*FP\right) / \left({P}_{mn}*TP\right)$
where *CrossEntropyLoss* is a cross entropy loss; *WasteRatio* is a cost of wasted female eggs per average identified male egg; *Kappa* and *F*₁ are evaluation indexes used respectively; *Wᵢ*(*i*=1...4) refers to a weight of a corresponding parameter; *N* is a number of samples; *C* is a number of currently classified classes; *yᵢⱼ* is a value of class *j* for a true label of sample *i*; *ŷᵢⱼ* is a prediction probability of the class *j* in corresponding probability distribution, output by the model, of the sample *i*; *FP* is a number of female eggs identified as male eggs; TP is a number of correctly identified male eggs; *P_{f}* is a price coefficient for incubating female chicks; and *Pₘₙ* is a price coefficient for male eggs selected in advance on day *n*; and
obtaining a classification result by means of judgment of the optimization model, then performing comparison based on the true label and the classification result, performing calculation to obtain a result by using the loss function, and calculating a gradient by means of backpropagation.

As a preferred solution of the network model of the invention, the evaluating is performed by using the following formula: $OA = \frac{TP + TN}{TP + FN + FP + TN} AA = \frac{1}{2} * \frac{TP}{TP + FN} * \frac{TN}{TN + FP}$
where *OA* represents overall accuracy; *AA* represents average accuracy; *TP* is a number of samples correctly predicted as positive; *TN* is a number of samples correctly predicted as negative; *FN* is a number of samples incorrectly predicted as negative; and *FP* is a number of samples incorrectly predicted as positive, $Kappa = \frac{OA - PE}{1 - PE} PE = \frac{\left(TN+FN\right) * \left(TN+FP\right) + \left(TP+FN\right) * \left(TP+FP\right)}{{\left(TN+FN++TP+FP\right)}^{2}}$
where *PE* is an expected random consistency probability, $F 1 = 2 * \frac{Precision * Recall}{Precision + Recall} Recall = \frac{TP}{TP + FN} Precision = \frac{TP}{TP + FP}$
where *Recall*and *Precision* are a recall rate and a precision rate respectively.

Yet another problem to be solved by the invention is how to provide a non-destructive identification method for egg sexes.

To solve the above technical problem, the invention provides the following technical solution: a non-destructive identification method for egg sexes includes: collecting spectral images of the fertilized eggs; segmenting regions of interest from collected images; constructing a network model; and interpreting and inferring key feature wavelengths based on the network model, and detecting the egg sexes based on a wavelength combination.

As a preferred solution of the non-destructive identification method for the egg sexes of the invention, the segmenting regions of interest from collected images includes the following steps: merging R, G, and B bands of the images, selecting an egg range, and obtaining a grayscale image; and further processing the grayscale image to segment a spectral image of an egg region from an original spectral image.

Yet another problem to be solved by the invention is how to provide a non-destructive identification system for egg sexes.

To solve the above technical problem, the invention provides the following technical solution: a system configured for non-destructive identification on egg sexes includes: a memory, storing computer readable instructions; and a processor, when executing the computer readable instructions, configured for: segmenting regions of interest from collected images; constructing a network model; and interpreting and inferring key feature wavelengths based on the network model, and detecting the egg sexes based on a wavelength combination.

As a preferred solution of the non-destructive identification system for the egg sexes of the invention, the segmenting regions of interest from collected images includes the following steps: merging R, G, and B bands of the images, selecting an egg range, and obtaining a grayscale image; and further processing the grayscale image to segment a spectral image of an egg region from an original spectral image.

The invention has the beneficial effects: the invention designs a novel network architecture called EggFormer. It innovatively integrates the SE layer and the depthwise separable convolution as a head of a new model, which achieves higher accuracy than a traditional dimension reduction method while requiring fewer bands. The EggFormer facilitates cost reduction and detection time shortening in industrial application, and also batch parallel processing.

### BRIEF DESCRIPTION OF DRAWINGS

To more clearly describe the technical solutions of the embodiments of the invention, the accompanying drawings required to describe the embodiments are briefly described below. Apparently, the accompanying drawings described below are only some embodiments of the invention. Those skilled in the art may further obtain Other drawings based on these accompanying drawings without inventive effort. In the drawings:
FIG. 1 is an architecture schematic diagram of a network model for identifying egg sexes of the invention;
FIG. 2 is a schematic diagram of assigning a greater weight to an important channel through a channel attention mechanism in one of implementations of the invention;
FIG. 3 is a diagram of comparison data for Recall of the invention using different methods for average spectrum preprocessing;
FIG. 4 is a diagram of comparison data for Accuracy of the invention using different methods for average spectrum preprocessing;
FIG. 5 is a diagram of comparison data for Precision of the invention using different methods for average spectrum preprocessing;
FIG. 6 is a diagram 24^{th} to 31^{st} channel images in 32 channel images obtained by a depthwise separable convolution of the invention;
FIG. 7 is a schematic flowchart of extracting a region of interest of the invention;
FIG. 8 illustrates a visualization of wavelength contribution degree in a random forest of the invention;
FIG. 9 is a diagram of principal components extracted by a principal component analysis method of the invention, with PC1, PC2, and PC3 shown from left to right, respectively;
FIG. 10 is a diagram of feature wavelengths selected by parsing a SE layer of an EggFormer model of the invention;
FIG. 11 is a schematic diagram showing visualization results for a female egg in one implementation of the invention, where the left side shows an image of RGB channels, while the right side shows a heatmap focused by a network model for identifying egg sexes;
FIG. 12 is a schematic diagram showing visualization results for another female egg in another implementation of the invention, where the left side shows an image of RGB channels, while the right side shows a heatmap focused by a network model for identifying egg sexes;
FIG. 13 is a schematic diagram showing visualization results for a male egg in one implementation of the invention, where the left side shows an image of RGB channels, while the right side shows a heatmap focused by a network model for identifying egg sexes; and
FIG. 14 is a schematic diagram showing visualization results for another male egg in another implementation of the invention, where the left side shows an image of RGB channels, while the right side shows a heatmap focused by a network model for identifying egg sexes.

### DETAILED DESCRIPTION OF THE EMBODIMENTS

In order to make the aforementioned purposes, features and advantages of the invention more apparent and comprehensible, detailed descriptions of specific implementations of the invention are provided below in conjunction with the appended drawings of the specification.

While the following description provides numerous specific details to fully comprehend the present invention, the present invention may also be implemented in ways other than those described here. Those skilled in the art can carry out similar promotions without deviating from the connotation of the present invention, and therefore, the present invention is not limited to the specific embodiments disclosed below.

Secondly, "one embodiment" or "embodiment" referred to herein refers to a specific feature, structure, or characteristic that may be included in at least one implementation manner of the present invention. The "in one embodiment" appearing in different parts of the present specification does not necessarily refer to the same embodiment, nor a separate or selective embodiment that is mutually exclusive to other embodiments.

Embodiment 1: a first embodiment of the present invention provides a neural network model applied to non-destructive identification on egg sexes. The network model necessarily includes an input layer, a hidden layer, and an output layer.

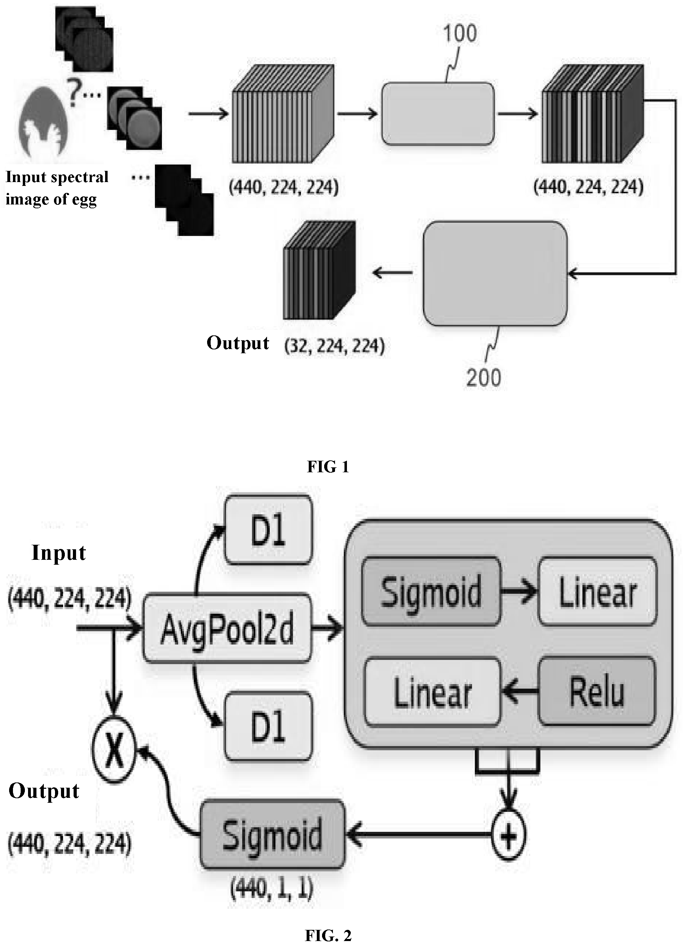

Referring to FIG. 1, in one implementation, two filtering layers, namely a first filtering layer 100 and a second filtering layer 200, are added to the input layer. the first filtering layer 100 is capable of selecting spectral image bands for features of fertilized eggs, while the second filtering layer 200 is capable of further extracting image features and channel features of the fertilized eggs.

The "spectral image" mentioned herein includes hyperspectral images of the fertilized eggs captured using a hyperspectral imaging technology, or multispectral images of the fertilized eggs collected with a specialized camera.

The first filtering layer 100 capable of selecting the image feature bands of the fertilized eggs can be implemented by machine leaning various algorithms, such as a random forest (RF) algorithm, a competitive adaptive reweighted sampling (CARS) algorithm, a successive projections algorithm (SPA), and a principal component analysis algorithm (PCA), for identifying an average spectral curve. Referring to Table 1 below:

**Table 1 Table for Performance Comparison Between Different Algorithms**

| Model | Input channel | Accuracy | Precision | Recall | F1 | Kappa |
|---|---|---|---|---|---|---|
| RF | 440 | 0.939 | 0.931 | 0.957 | 0.943 | 0.877 |
| PCA-PLSDA | 440 | 0.901 | 0.87 | 0.957 | 0.911 | 0.799 |
| SPA-PLSDA | 440 | 0.839 | 0.795 | 0.943 | 0.863 | 0.673 |
| CARS-PLSDA | 440 | 0.808 | 0.771 | 0.914 | 0.837 | 0.609 |

The second filtering layer capable of further extracting the image features and the channel features of the fertilized eggs can be implemented using conventional deep learning methods, such as a depthwise separable convolution, a full convolution, or a dilated convolution. Referring to Table 2 below:

**Table 2 Table for Performance Comparison Between Different Convolutional Methods**

| | Accuracy | Precision | Recall | F1 | Kappa | Model parameter | Training parameter |
|---|---|---|---|---|---|---|---|
| Full convolution | 0.923 | 0.947 | 0.913 | 0.925 | 0.847 | 91.99M | 6.94M |
| Dilated convolution | 0.931 | 0.931 | 0.942 | 0.935 | 0.862 | 91.99M | 6.94M |

Analysis reveals that original hyperspectral or multispectral images contain multiple channels with too much redundant information. Using all channels as model inputs makes it challenging to extract effective information. Therefore, in this implementation, a multi-channel image is downsampled into an average spectral curve, that is, each channel's image is averaged, with converting the hyperspectral image into a feature vector with the same dimensionality as a number of channels. In a case of the original hyperspectral image including 300 channels, its corresponding average spectral curve is represented as a 300-dimensional vector.

In one implementation, reference to FIG. 1, an input spectral image of a fertilized egg is a 440-channel image composed of 440 wavelengths. Each channel image is a grayscale image with a width and length of 224, meaning that an input dimension is (440, 224, 224), and a value of each pixel point ranges from 0 to 255. After the input spectral image passes through the first filtering layer 100, an output dimension remains unchanged as (440, 224, 224), but each channel image contains weight information for the channel, where each color represents a different channel image, with darker color indicating higher importance and greater weight for the channel. Subsequently, a depthwise separable convolution is applied to further extract image features and channel information, with a number of channels being reduced from 440 to 32 and an output dimension being (32, 224, 224). Similarly, the darker color in each channel indicates higher importance. A function of the depthwise separable convolution is to eliminate redundant and less important channel images. As shown in FIG. 1, the output channel images are predominantly darker in color.

Certainly, as a person skilled in the art, it should also be recognized that additional filtering layers, such as a third filtering layer, a fourth filtering layer, or even more filtering layers, can be employed, as shown in Table 3 below:

**Table 3 Table for Performance Comparison Between Different Filtering Layers**

| Layer | Accuracy | Precision | Recall | F1 | Kappa | Model parameter | Training set parameter |
|---|---|---|---|---|---|---|---|
| SE + Depthwise separable convolution + Full convolution | 0.939 | 0.932 | 0.957 | 0.942 | 0.877 | 91.68M | 6.63M |
| SE + Depthwise separable convolution + Dilated convolution | 0.939 | 0.932 | 0.957 | 0.942 | 0.877 | 91.68M | 6.63M |
| SE + Depthwise separable convolution + SE separable convolution | 0.946 | 0.933 | 0.971 | 0.951 | 0.892 | 91.66M | 6.6M |
| SE + Depthwise separable convolution | 0.954 | 0.933 | 0.986 | 0.958 | 0.908 | 91.66M | 6.6M |

As shown from the comparison results in the above table, two filtering layers achieves the best effect, with an accuracy being 0.954. Among comprehensive evaluation indexes for the model, F1 and Kappa are both the best indexes, reaching 0.958 and 0.908, respectively. Additionally, the model requires the fewest parameters and training parameters.

Meanwhile, through comparative experiments, the inventors have demonstrated that the network model can be suitable for identifying sexes of chicken eggs and quail eggs. However, it is not inherently applicable to duck eggs, goose eggs, or other poultry eggs, as its identification effect is poorer than that achieved by a combination of the first filtering layer 100 and the second filtering layer 200 in this implementation.

Different filtering layers can also be added to the hidden layer. Alternatively, the first filtering layer 100 can be added to the input layer, while the second filtering layer 200 can be added to the hidden layer.

Compared with embodiment 1, embodiment 2 is different in that: in this implementation, the first filtering layer 100 captures information about a potential inter-channel correlation in an average spectrum through a channel attention mechanism, assigning a greater weight to an important channel.

The channel attention mechanism adaptively rescales the features of each channel by modeling interdependencies among the feature channels. The channel attention mechanism allows the network to focus on a more usable channel and enhances a discriminative learning capability. The channel attention mechanism enables a neural network to automatically determine importance of each channel and then assign an appropriate weight to it. Each channel of a feature map is regarded as a feature detector. Therefore, channel features focus on "what" useful information is present in the image.

Specifically for the "captures information about a potential inter-channel correlation in an average spectrum" herein, the average spectrum refers to a result obtained by averaging spectral data of multiple samples within a certain region. The spectrum typically describes characteristics or a composition of an object by measuring an intensity of light at different wavelengths. In analyzing the spectrum, the focus is typically on intensity variations at different wavelengths and a correlation between them. Such correlation helps understand how signals at different wavelengths change over time, conditions, or other factors, thereby revealing properties or a state of the object.

Understanding the correlation in the average spectrum helps analyze data and identify a pattern. When consistent trends in spectral data are observed across different samples at certain wavelengths, it can be believed there is the correlation between these wavelengths. Such correlation indicates that these wavelengths are significant for distinguishing different categories of samples or features.

The reason that the model can make classification based on the average spectral curves is that these curves represent typical spectral features of different categories or features. When these features are input into a machine learning model for training, the model can learn differences between different categories. Also, in receiving new spectral data, it can make a classification prediction based on these learned features.

In this implementation, the channel attention mechanism can be implemented using an ECANet attention mechanism (Efficient Channel Attention for Deep Convolutional Neural Networks), an SE layer attention mechanism (Squeeze-and-Excitation Networks), a convolutional block attention module (CBAM) architecture, spatial transformer networks (STNs), a spatial transformer layer (STL) network structure or the like.

A concept of "important channel" can be understood in such a way that: taking the attention mechanism using an improved SE layer as an example, referring to FIG. 2, AvgPool2d represents an average spectrum of the input spectral image, D1 and D2 are first-order and second-order derivatives of AvgPool2d respectively, and all three are 440-dimensional vectors; Sigmoid is a function scaling an input to a range of 0 to 1; Linear is a nonlinear transformation; and Relu function sets an input less than 0 to 0. The three 440-dimensional vectors undergo another Linear transformation and then are directly summed. Finally, the summed vector is transformed and projected into the 0-1 interval via the function Sigmoid, and then undergoes a bitwise multiplication operation with the original spectral image, that is, an i^{th} value is directly multiplied with an i^{th} channel of the input (where i ∈ [0, 440]), resulting in an output dimension remaining 440 channels. However, after an output is processed through the improved SE layer's attention mechanism, the output contains importance information of the channel.

Compared with embodiment 1 or 2, embodiment 3 is different in that the first filtering layer 100 can perform the following processing: downsampling each channel of the spectral image into a mean value. For example, a two-dimensional average pooling operation (AvgPool2d) can be applied to downsample each channel of the spectral image into a mean value, and downsampling of images across all the channels constitutes the average spectrum. Then, the average spectrum passes through two fully connected layers or undergoes a nonlinear transformation followed by an improvement operation to obtain multi-dimensional vectors. For example, if the original spectral image contains 440 channels, after it passes through the two fully connected layers or undergoes the nonlinear transformation followed by the improvement operation, three 440-dimensional vectors are obtained. The obtained vectors are then summed to obtain a weight for each channel. Finally, the weight is multiplied with each channel of the original image with containing an importance feature of the channel in output data. For example, the i^{th} value is directly multiplied with the i^{th} channel of the input (where i ∈ [0, 440]), with the output dimension remaining 440 channels.

The mathematical formula corresponding to the "nonlinear transformation" herein is as follows: $Output = input \times weig h {t}^{T} + bias$
where *input* is an input tensor of size (N, in_features), where N is the size of the input, and in_features is a number of input features; *weig*h*t* is a weight matrix of size (out_features, in_features), where out_features is a number of output features; and *bia*s is a bias vector of size (out_features). Specifically, it can be expressed as: ${y}_{i} = {\sum }_{j = 1 … n} {x}_{ij} ⋅ {w}_{j}^{T} + b$
where *x* is the input tensor; *xᵢⱼ* is a tensor in an *i*^{th} row and an *j*^{th} column of the input matrix; and *wⱼ*is a tensor in the *j*^{th} column of *w*. As indicated by the expression, the output tensor *yᵢ* , i.e., the *i*^{th} row of *y*, is a sum of dot products between all data in the*i*^{th} row of *x* and the *j*^{th} column of *w*, added to a constant b.

In this implementation, the "improvement operation" may be a method such as a Savitzky Golay (SG) smoothing algorithm, multiplicative scatter correction (MSC), standard normal variate (SNV) normalization, 1^{st} derivatives (D1), 2^{nd} Derivatives (D2), or a combined operation of D1 and D2, among others.

For example, the combined operation of D1 and D2 is specifically as follows: $D {1}_{i} = \left\{\begin{matrix}{AνgP}_{i + 1} - {AνgP}_{i} & \left(i=0,1…,n-1\right) \\ 0 & \left(i=n\right)\end{matrix}\right.$ $D {2}_{i} = \left\{\begin{matrix}D {1}_{i + 1} - D {1}_{i} & \left(i=0,1…,n-2\right) \\ 0 & \left(i=n-1,n\right)\end{matrix}\right.$
wherein *AvgPᵢ* is a mean value of an *i*^{th} channel image; *n* is a number of channels of the spectral image; *D*1*ᵢ* is a first-order derivative corresponding to an *i*^{th} channel; and *D*2*ᵢ* is a second-order derivative corresponding to the *i*^{th} channel.

In embodiment 4, the first filtering layer 100 used is directly the SE layer.

In another implementation, the improvement operation is performed on the SE layer.

Specifically, the improvement operation is preferably the combined operation of D1 and D2, specifically as follows: $D {1}_{i} = \left\{\begin{matrix}{AνgP}_{i + 1} - {AνgP}_{i} & \left(i=0,1…,n-1\right) \\ 0 & \left(i=n\right)\end{matrix}\right.$ $D {2}_{i} = \left\{\begin{matrix}D {1}_{i + 1} - D {1}_{i} & \left(i=0,1…,n-2\right) \\ 0 & \left(i=n-1,n\right)\end{matrix}\right.$
wherein *AvgPᵢ* is a mean value of an *i*^{th} channel image; *n* is a number of channels of the spectral image; *D*1*ᵢ* is a first-order derivative corresponding to an *i*^{th} channel; and *D*2*ᵢ* is a second-order derivative corresponding to the *i*^{th} channel.

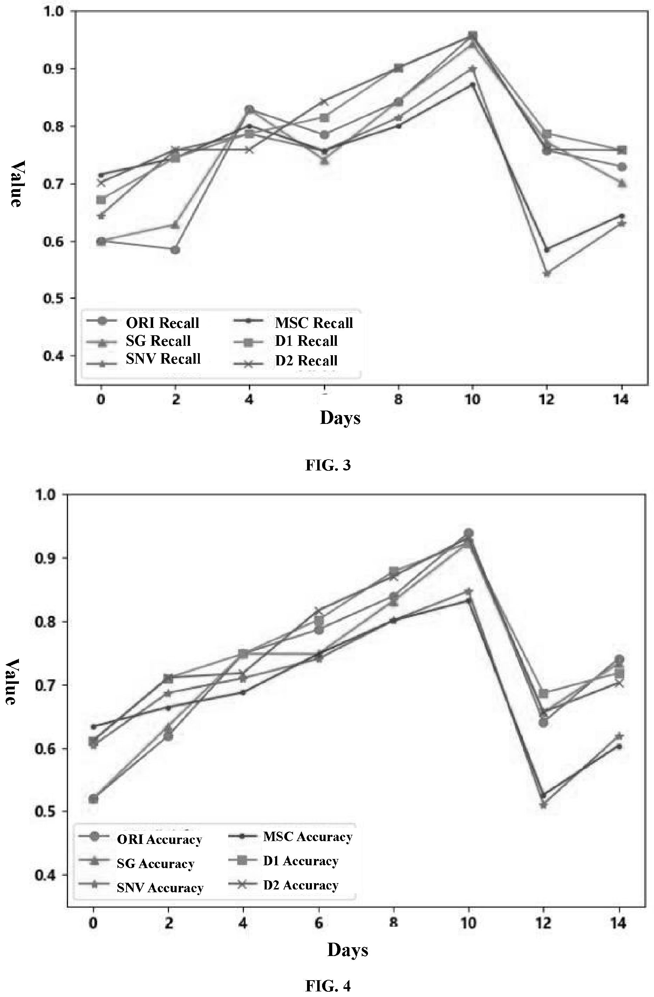

To validate creativity of the preferred network model for identifying the egg sexes in this implementation, hyperspectral images are collected every two days from day 0 to day 14 of incubation (i.e., days 0, 2, ..., 14). The spectral image for each day is transformed into an average spectral curve, which is then preprocessed using 6 different methods. Results are shown in FIGs. 3 - 5, where ORI (Original) means no preprocessing applied; the Savitzky Golay (SG) smoothing algorithm, proposed by Savitzky and Golay, is a polynomial smoothing algorithm based on a principle of least squares, also known as convolutional smoothing; multiplicative scatter correction (MSC) enables the spectral data subjected to scatter correction to effectively eliminate spectral differences caused by varying scattering levels, thereby enhancing a correlation between the spectrum and the data; standard normal variate (SNV) is used for correcting an spectral error caused by scattering between samples;1^{st} derivatives (D1) refer to first-order derivatives; and 2^{nd} Derivatives (D2) refer to second-order derivative derivatives.

Subsequent to preprocessing of the average spectra, the Random Forest algorithm is used for sex prediction. Comparison on results indicates that all six preprocessing methods achieve their highest accuracy on day 10, where accuracy of the original average spectrum, as well as the first-order and second-order derivatives all exceed 0.9 on day 10, with values of 0.939, 0.923, and 0.931, respectively. Among them, the original spectrum achieves the highest accuracy. A similar situation is observed in a precision diagram, in which precision of the original spectrum, D1, and D2 is 0.931, 0.905, and 0.918, respectively. Under the recall, all three achieve a same value of 0.957. Therefore, based on the best results, the original spectral data is used for subsequent analysis on data on day 10.

In this embodiment, comparison is also performed among using only the SE layer, using only the first-order derivatives, using only the second-order derivatives, and using the SE layer subjected to the improvement operation. Results are shown in Table 4 below:

**Table 4 Result Comparison Table**

| Model/layer | Accuracy | Precision | Recall | F1 | Kappa |
|---|---|---|---|---|---|
| SE layer | 0.939 | 0.932 | 0.957 | 0.942 | 0.877 |
| First-order derivative | 0.946 | 0.933 | 0.971 | 0.951 | 0.892 |
| Second-order derivative | 0.946 | 0.933 | 0.971 | 0.951 | 0.892 |
| SE layer subjected to improvement operation | **0.954** | **0.933** | **0.986** | **0.958** | **0.908** |

It can be seen from the results that, the SE layer subjected to the improvement operation, whose channel attention mechanism accounts for the mean value of the spectral image, achieves the best effect in a case of combining the first-order and second-order derivatives, and all the indexes are optimal, with the accuracy being 0.954, F1 being 0.958, and Kappa being 0.908, respectively. The first-order and second-order derivatives achieve the better effect than the mean value contained in a traditional SE channel attention, indicating that a difference between the channels contains more information about sex identification.

In embodiment 5, the second filtering layer is capable of further extracting the image features and the channel features of the fertilized eggs and selecting the channel features. In this implementation, the second filtering layer 200 is capable of further extracting the image texture information and the channel information and reducing the channel features.

Compared with embodiment 1 or 2, the second filtering layer 200 in this embodiment is different in that the second filtering layer 200 can perform the following processing: reducing a channel dimension by means of pointwise convolution; extracting a feature inside each channel by means of depthwise convolution on the channel with the reduced dimension; and fusing inter-channel information by means of another pointwise convolution to obtain an output image of the channel with the reduced dimension.

The second filtering layer can be implemented using a conventional convolutional method. Taking classic full convolution and dilated convolutions as examples, a comparative experiment indicates that the depthwise separable convolution not only achieves the best effect in accuracy of 0.954, but also requires fewer parameters and training parameters than the full convolution and the dilated convolution. This contributes to shortening the model's inference time and improving efficiency of egg prediction, as shown in Table 5 below:

**Table 5 Table for Performance and Parameter Comparison Between Different Convolutional Methods**

| Model type | Accuracy | Precision | Recall | F1 | Kappa | Model parameter | Training parameter |
|---|---|---|---|---|---|---|---|
| Depthwise separable convolution | 0.954 | 0.933 | 0.986 | 0.958 | 0.908 | 91.66M | 6.6M |
| Full convolution | 0.923 | 0.947 | 0.913 | 0.925 | 0.847 | 91.99M | 6.94M |
| Dilated convolution | 0.931 | 0.931 | 0.942 | 0.935 | 0.862 | 91.99M | 6.94M |

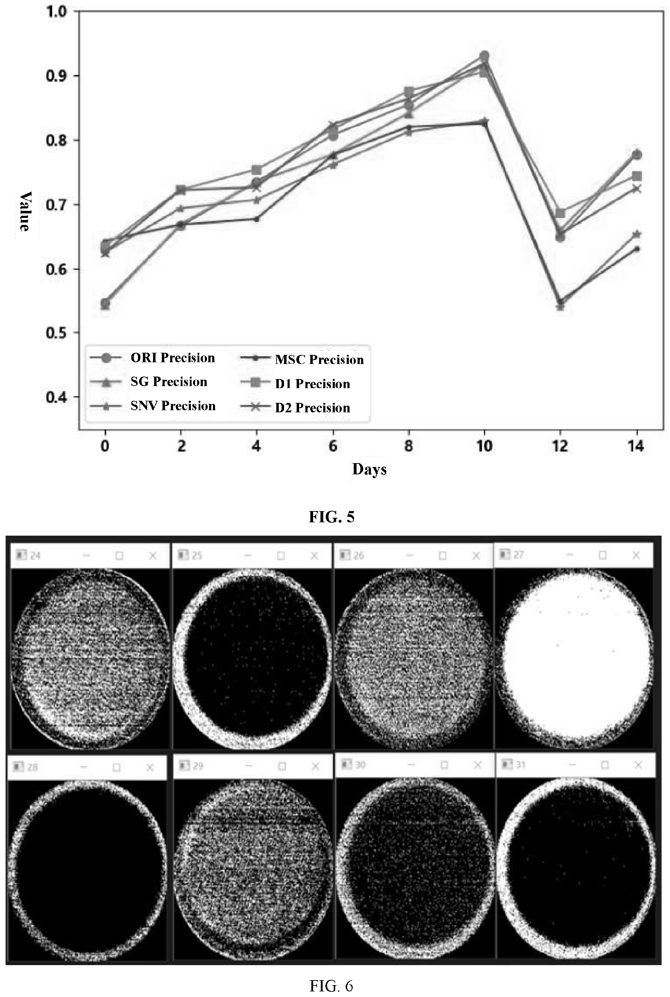

As shown in FIG. 6, it shows the 24^{th} to 31^{st} channel images in the 32-channel image obtained by the depthwise separable convolution. The network model for identifying the egg sexes extracts distinct image texture information from these channels, and the image texture information contains potential information about sex identification of the fertilized eggs. The network model for identifying the egg sexes can leverage these textures to differentiate between the male and female eggs, ultimately enabling prediction of the sexes of the fertilized eggs.

Preferably, the second filtering layer 200 achieves the best effect in a case of being a depthwise separable convolution layer.

In embodiment 6, this implementation of the present invention provides a method for constructing a network model for identifying egg sexes, at least including two steps of: selecting feature bands; and further extracting image features and channel features.

The operation of selecting the image feature bands of the fertilized eggs be implemented by machine leaning various algorithms, such as a random forest (RF) algorithm, a competitive adaptive reweighted sampling (CARS) algorithm, a successive projections algorithm (SPA), and a principal component analysis algorithm (PCA), for identifying an average spectral curve.

The operation of further extracting the image features and the channel features of the fertilized eggs can be implemented using conventional deep learning methods, such as a depthwise separable convolution, a full convolution, or a dilated convolution.

Analysis reveals that original hyperspectral or multispectral images contain multiple channels with too much redundant information. Using all channels as model inputs makes it challenging to extract effective information. Therefore, in this implementation, a multi-channel image is downsampled into an average spectral curve, that is, each channel's image is averaged, with converting the hyperspectral image into a feature vector with the same dimensionality as a number of channels. In a case of the original hyperspectral image including 300 channels, its corresponding average spectral curve is represented as a 300-dimensional vector.

For example, a two-dimensional average pooling operation (AvgPool2d) can be applied to downsample each channel of the spectral image into a mean value, and downsampling of images across all the channels constitutes the average spectrum. Then, the average spectrum passes through two fully connected layers or undergoes a nonlinear transformation followed by an improvement operation to obtain multi-dimensional vectors. For example, if the original spectral image contains 440 channels, after it passes through the two fully connected layers or undergoes the nonlinear transformation followed by the improvement operation, three 440-dimensional vectors are obtained. The obtained vectors are then summed to obtain a weight for each channel. Finally, the weight is multiplied with each channel of the original image with containing an importance feature of the channel in output data.

In this implementation, the selecting image feature bands of fertilized eggs is enabled by means of an SE layer. Preferably, in another implementation, the improvement operation is performed on the SE layer.

Specifically, the improvement operation is preferably the combined operation of D1 and D2, specifically as follows: $D {1}_{i} = \left\{\begin{matrix}{AvgP}_{i + 1} - {AvgP}_{i} & \left(i=0,1…,n-1\right) \\ 0 & \left(i=n\right)\end{matrix}\right.$ $D {2}_{i} = \left\{\begin{matrix}D {1}_{i + 1} - D {1}_{i} & \left(i=0,1…,n-2\right) \\ 0 & \left(i=n-1,n\right)\end{matrix}\right.$
wherein *AvgPᵢ* is a mean value of an *i*^{th} channel image; *n* is a number of channels of the spectral image; *D*1*ᵢ* is a first-order derivative corresponding to an *i*^{th} channel; and *D*2*ᵢ* is a second-order derivative corresponding to the *i*^{th} channel.

To validate creativity of the preferred network model for identifying the egg sexes in this embodiment, hyperspectral images are collected every two days from day 0 to day 14 of incubation (i.e., days 0, 2, ..., 14). The spectral image for each day is converted into an average spectral curve and preprocessed using 6 methods. Results are shown in FIGs. 3 - 5.

Experimental comparison reveals that the SE layer subjected to the improvement operation, whose channel attention mechanism accounts for the mean value of the spectral image, achieves the best effect in a case of combining the first-order and second-order derivatives, and all the indexes are optimal.

The further extracting image features and channel features of the fertilized eggs and selecting the channel features includes: reducing a channel dimension by means of pointwise convolution; extracting a feature inside each channel by means of depthwise convolution on the channel with the reduced dimension; and fusing inter-channel information by means of another pointwise convolution to obtain an output image of the channel with the reduced dimension. For example, the channel dimension is first changed to 32 via a pointwise convolution; subsequently, a depthwise convolution is applied to the 32 channels to extract the features from each channel; and then, another pointwise convolution is performed to fuse inter-channel information, yielding a 32-channel output image. This step can be implemented using a conventional convolutional method. Taking classic full convolution and dilated convolutions as examples, a comparative experiment indicates that the depthwise separable convolution not only achieves the best effect in accuracy of 0.954, but also requires fewer parameters and training parameters than the full convolution and the dilated convolution. This contributes to shortening the model's inference time and improving efficiency of egg prediction.

In embodiment 7, after the network model is built, the next critical steps involve training, evaluating, and optimizing the network model.

The training process is an indispensable part of the method for constructing the network model for identifying the egg sexes and requires effective training and adjustment to enable the built network model to better adapt to the specific requirements.

In one implementation, the training process is completed by the following steps:
First, randomly dividing the preprocessed hyperspectral images into a training set and a test set at a ratio of 2 to 1, with ensuring that a ratio of sexes of the fertilized eggs in the two datasets should not to be too large to avoid bias in model classification; and selecting appropriate training hyperparameters such as a loss function, an optimizer, a learning rate, and a batch size to complete an initialization process.

The optimizer used in model training is AdamW optimizer. Given the industrial demands of the industry of laying hens, a new loss function is designed to minimize a misidentification rate of the female eggs, with its calculation formulation as follows:
a loss function is used to fit an optimization model, $criterion = {W}_{1} CrossEntropyLoss \left(\right) + {W}_{2} Waste _ Ratio + {W}_{3} Kappa + {W}_{4} {F}_{1}$ $CrossEntropyLoss = - \frac{1}{N} {Σ}_{i = 1}^{N} {Σ}_{j = 1}^{C} {y}_{ij} log \left({\hat{y}}_{ij}\right)$ $WasteRatio = \left({P}_{f}*FP\right) / \left({P}_{mn}*TP\right)$
where *CrossEntropyLoss* is a cross entropy loss; *WasteRatio* is a cost of wasted female eggs per average identified male egg; *Kappa* and *F*₁ are evaluation indexes used respectively; *Wᵢ*(*i*=1...4) refers to a weight of a corresponding parameter; *N* is a number of samples; *C* is a number of currently classified classes; *yᵢⱼ* is a value of class *j* for a true label of sample *i*; *ŷᵢⱼ* is a prediction probability of the class *j* in corresponding probability distribution, output by the model, of the sample *i*; *FP* is a number of female eggs identified as male eggs; TP is a number of correctly identified male eggs; *P_{f}* is a price coefficient for incubating female chicks; and *Pₘₙ* is a price coefficient for male eggs selected in advance on day *n*.

After configuration of the network model parameters, the next step is proceeded to with training the built network model; a classification result is obtained by means of judgment of the model, then comparison is performed based on the true label and the classification result, calculation is performed to obtain a result by using the loss function, and a gradient is calculated by means of backpropagation; and the AdamW optimizer is selected to update network model parameters based on the gradient, the above process is continuously repeated, network parameters are iteratively updated, and finally, the network gradually converges to optimal performance.

Additionally, it can be discovered from researches that compared with a convolutional neural network (CNN), a transformer attention mechanism in ViT lacks inductive bias, i.e. a form of prior knowledge. Therefore, in a case of small size of data, performance of the transformer attention mechanism may be affected and is thus poor. A transfer learning method is employed in this implementation to compensate for the prior knowledge missing in the network model, specifically including the following steps:

Freezing model weights trained based on data set ImageNet-21K, and elaborately fine-tuning the model weights for a downstream task to enhance model performance.

In model training, some existing skills are also tried. It can be found from comparison results that incorporating these skills benefits the final model's performance, such as DropPath and Cosine Learning Rate Decay.

In addition to the aforementioned skills, the present invention also uses data augmentation in a model training phase to address the disadvantage of insufficient sample data. Meanwhile, data augmentation can also help the network model adapt to various data variations and noise to a certain extent, thereby improving generalization of the model. Compared with a traditional RGB image, the hyperspectral image has more channels, so identical operations are applied to pictures of all the channels.

Five traditional data augmentation methods are primarily used in this process, including: random horizontal flip, random rotation, random erasing, random Gaussian noise, and random brightness.

Random horizontal flip: it is to horizontally flip the image with a specified flipping probability parameter to control the likelihood of flipping occurrence. This aids the model in learning a symmetric target object from different directions while enhancing data diversity.

Random rotation: it is to rotate the image by a random angle to simulate shooting from different perspectives. This helps the model learn target features at various angles, thereby improving robustness of the model to a pose variation of a target object. Upon specifying the rotation angle, corresponding affine transformation is performed on positions of the pixel points following the following formula: ${x}_{rotate} = {x}_{origin} \times cos \left({θ}_{rotate}\right) - {y}_{origin} \times sin \left({θ}_{rotate}\right)$ ${y}_{rotate} = {x}_{origin} \times sin \left({θ}_{rotate}\right) + {y}_{origin} \times cos \left({θ}_{rotate}\right)$
where (*x_{origin}*,*y_{origin}*) and (*xᵣₒₜₐₜₑ*,*yᵣₒₜₐₜₑ*) are pixel coordinates transformed and untransformed by the formula respectively, and *θᵣₒₜₐₜₑ* is a clockwise rotation angle relative to an original image. This transformation applied to all pixels completes a rotation operation on the entire picture.

Random Erasing: its primary objective is to introduce noise by randomly masking a portion of the image, thereby encouraging the model to focus on local regions and enhancing its generalization capability. Its specific operation involves randomly selecting a rectangular region within the image upon specifying an erased area ratio and a length-width ratio of an erased region, setting pixel values within this region as predefined pixel values (such as mean values or random noise), and forcing the model to rely on other available information for a classification or regression task by introducing this local information shortage, thereby enhancing the model's robustness and generalization capability. Among them, parameters of random horizontal flip, random rotation, random erasing, random Gaussian noise, and random brightness are as follows: ${p}_{turn} = 0.8 , {θ}_{rotate} = 180 ° , scale = \left(0.02, 0.05\right) , ratio = \left(0.3-3.3\right)$
where *pₜᵤᵣₙ* is a probability parameter of all operations, *θᵣₒₜₐₜₑ* represents a random rotation angle range of plus/minus 180 degrees; *scale* is an erased area ratio for random erasing, i.e. an erasing ratio is between 2% and 5% of the original image; and *ratio* represents the length-width ratio of the erased region, so the length-width ratio of the erased region is set as any numerical value ranging from 0.3 to 3.3.

Furthermore, many other hyperparameters are also specified for network model training, where the parameters are as follows: *epoc*h is a number of training epoches; *batc*h*size* is a batch size of training; *lr* is a learning rate used in training; *optimizer* is a class of the optimizer used in training; and *patience* is a number of epochs required for controlling early stop; the parameters are optimized using the *Hyperopt* library with random search of optimal parameters within a defined search space: $epoc h = 120 , batc h size = 64 , optimizer = Adam , lr = 5 e - 4 , patience = 30$

The loss function is defined as a combination of the above *CrossEntropyLoss*, *WasteRatio*, *Kappa*, and *F*₁. The loss is calculated in each epoch following the formula, gradually minimizing it in continuous training, and then is circulatively iterated until the network model progressively converges in gradient descending, with steadily improving performance and classification accuracy to yield a final network model for identifying the egg sexes.

In embodiment 8, to ensure robustness of the network model for identifying the egg sexes, three-fold cross-validation is employed, with a mean value of three results serving as a final evaluation index.

In this implementation, comprehensive evaluation indexes used in the present invention include overall accuracy (OA), F1 score, Kappa coefficient, etc. with their calculation formulas as follows: $OA = \frac{TP + TN}{TP + FN + FP + TN} AA = \frac{1}{2} * \frac{TP}{TP + FN} * \frac{TN}{TN + FP}$
where *OA* represents overall accuracy; *AA* represents average accuracy; *TP* (True Positive) is a number of samples correctly predicted as positive; *TN* is a number of samples correctly predicted as negative; *FN* (False Negative) is a number of samples incorrectly predicted as negative; and *FP* (False Positive) is a number of samples incorrectly predicted as positive, $Kappa = \frac{OA - PE}{1 - PE} PE = \frac{\left(TN+FN\right) * \left(TN+FP\right) + \left(TP+FN\right) * \left(TP+FP\right)}{{\left(TN+FN++TP+FP\right)}^{2}}$
where *PE* is an expected random consistency probability, i.e. a proportion of classification consistency achieved in a random case; the Kappa coefficient takes a difference between expected precision and actual precision into consideration, used for evaluating classification consistency of the network model. $F 1 = 2 * \frac{Precision * Recall}{Precision + Recall} Recall = \frac{TP}{TP + FN} Precision = \frac{TP}{TP + FP}$

*Recall* and *Precision* are a recall rate and a precision rate respectively. F1 is an index comprehensive considering Recall and Precision, being a harmonically average of both Recall and Precision.

To elucidate an internal operation mechanism of the network model for identifying the egg sexes and grasp which regions within the image having the critical effects on sex classification, Gradient-weighted Class Activation Mapping (Grad-CAM) is used for gradient-based visualization, thereby facilitating an evaluation process of the network model for identifying the egg sexes.

These pieces of gradient information indicate model's sensitivity to target sex classification while enabling to track contribution of each image pixel for this class. Based on these pieces of gradient information, a heatmap is generated where each pixel is assigned a weight, reflecting its importance to the network model's classification decision.

In embodiment 9, this embodiment provides a non-destructive identification method for egg sexes using a spectral image, including the following steps:
S1: Collecting and then preprocessing a sufficient number of fertilized egg samples.

As the present invention primarily solves the early-stage embryonic sex classification problem of chickens, it is necessary to collect a sufficient number of fertilized egg samples to meet subsequent experimental requirements.

To ensure authenticity and persuasiveness of experimental data, interference from other environmental factors should be suppressed to avoid situations such as cracked eggs or eggs unable to be hatched. Next, it should be ensured that the experimental samples are incubated under suitable and consistent conditions, with their surfaces kept dry and placed in incubators for completing an entire incubation process. Furthermore, after data collection, it requires to rapidly return the samples to the incubators to prevent any impact on survival rate or subsequent data collection.

Preferably, the present invention requires to use the hyperspectral technology to extract multi-band information, thereby identifying and classifying the egg sexes on this basis.

S2: Collecting hyperspectral images of the fertilized eggs using the hyperspectral technology, with ensuring environmental stability and continuously collecting the images.

It should be ensured that the images are collected by means of a high-precision hyperspectral camera with a need for ensuring all other conditions unchanged in addition to the samples.

Additionally, for meeting the subsequent experimental requirements, the collection process needs to be conducted continuously, that is, the hyperspectral images of the fertilized eggs are collected every even-numbered day (i.e., day 0, 2, 4, etc.) from day 0 to day 14 of incubation.

It is necessary to minimize interferences from the environmental factors in image collection. If there are the situations such as light leakage and low resolution, it requires immediate re-shooting to ensure image quality.

In collection, hyperspectral projection images of the fertilized eggs are obtained using the linear scanning method, with a preferred capturing solution being transmission-based collection of large-end images, specifically: each fertilized egg is positioned with a blunt end facing upward and a tapered end facing downward; a light source is placed directly beneath the egg; a distance between the egg and the hyperspectral camera is adjusted based on a focal length of the camera, making the camera is positioned 30 cm or higher above the egg; and light transmits the egg to collect the images, in which the transmission method is the light passing through the egg's interior, and being sufficiently absorbed and reflected, and then physiochemical property-related information being collected.

Those skilled in the art would know that in this implementation, the "each fertilized egg is positioned with a blunt end facing upward and a tapered end facing downward; a light source is placed directly beneath the egg" is not the only placement method. In other implementations, the fertilized egg can be photographed directly from the front view, regardless of whether the blunt end faces upward or the tapered end faces downward.

Additionally, the quality of the hyperspectral images also depends on configurations of various related parameters. Therefore, before testing, it requires adjustment and optimization on parameters such as an exposure time, a platform movement speed, and light intensity.

Furthermore, if light intensity distribution of a light source of a CCD camera used in the experiment is unstable, the collected hyperspectral images can also be corrected by using a black-and-white correction method.

S3: Segmenting regions of interest from backgrounds of the spectral images, and selecting feature bands.

The segmenting regions of interest includes: after color correction, it becomes evident that while the multi-band spectral information is successfully extracted from the spectral images, same black backgrounds are only collected from large blank portions in the images, which poses a significant obstacle for subsequent image identification.

Therefore, to eliminate interference from excessive noise information around the eggs in the original images, the experiment requires first segmenting the regions of interest from the backgrounds before proceeding with subsequent operations.

In this process, R, G, and B bands are first merged to obtain RGB images, then grayscale images are further processed using a computer image processing technology, and finally the regions of interest are identified by means of the HoughCircle detection method, thereby segmenting the spectral images of the regions of interest from the original spectral images.

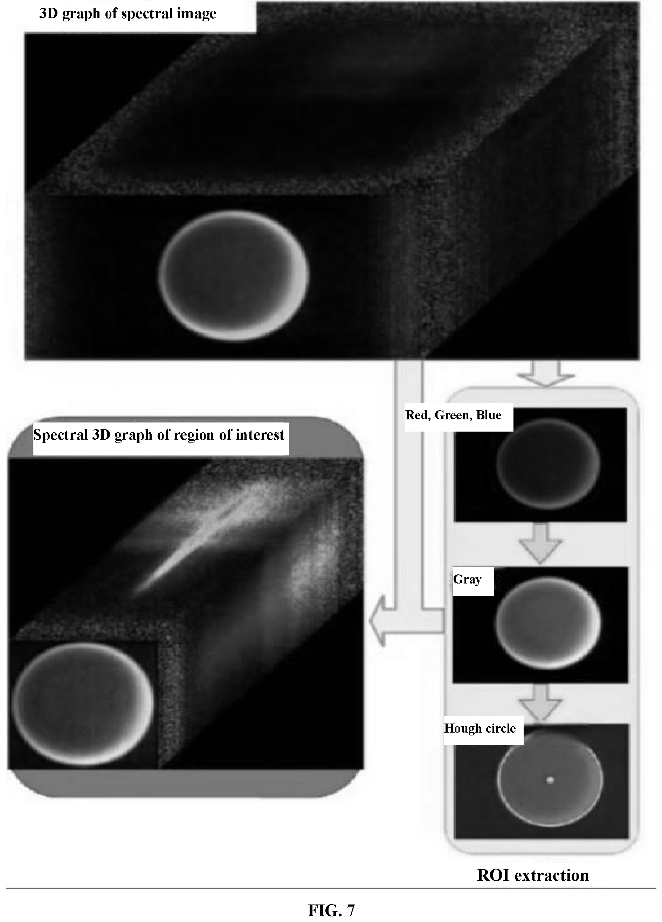

As observed in the collected images, not the entire images contain egg identification information. Therefore, it is necessary to first segment the regions of interest from the backgrounds. An extraction process for the regions of interest is shown in FIG. 7 below.

It can be seen from FIG. 7 that the original spectral image contains much noise information. The RGB image is constructed by merging bands at 638.82 nm (R), 548.83 nm (G), and 459.64 nm (B). Subsequently, the grayscale image is processed by means of the computer vision technology, and a range of the region of interest is obtained directly by means of the HoughCircle detection method.

The selecting feature bands includes:
In S2, the original spectral images are collected using the hyperspectral camera, but these spectral images cannot be directly used as subsequent original input for the network model for identifying the egg sexes.

Consequently, most research methods such as Random Forest opt to use average spectra instead of excessively large original multi-band image input. That is, by calculating a mean value of all pixels in each channel image, a representative average spectrum can be derived, thereby converting each original hyperspectral image into a 440-dimensional vector.

While the average spectrum method significantly facilitates input of the network model for identifying the egg sexes and saves calculation resources in training the network model for identifying the egg sexes, averaging all pixel values per channel inevitably leads to unnecessary information waste.

To prevent information loss caused by the average spectrum, the proposed network model for identifying the egg sexes (referred to as the EggFormer model by the inventor in experiments) in the present invention can directly use the original multi-band spectral images as input for subsequent training.

Each original spectral image contains 440 bands, but a spectral image with multiple bands may pose challenges for subsequent network model training.

Consequently, various existing research methods attempt to analyze feature importance of individual bands, so as to extract those with greater contribution values, thereby achieving dimension reduction on the multi-band images.

The EggFormer model proposed by the present invention incorporates the enhanced SE layer, which also achieves an effect of selecting important feature bands for dimension reduction. Compared with the existing method, the EggFormer not only extracts the feature bands with the accuracy identical to or more than the existing method, but also extracts fewer feature bands with a better effect.

S4: Building an EggFormer model, and training and evaluating the EggFormer model.

After data collection and processing, in this embodiment, the proposed EggFormer model implementing transfer based on Vision Transformer Base/16 is built.

To better adapt to full-image input, the network model underwent relevant modifications. Its specific operation is to add improved squeeze-and-excitation (SE) layers and a depthwise separable convolution to a head of the network model.

Each SE layer can leverage a channel attention mechanism to capture information about the potential inter-channel correlation in the average spectrum, assigning a greater weight to an important channel. The depthwise separable convolution can further extract both the image and channel features and reduce the image channels, while maintaining a small parameter quantity and calculation cost.

Specifically, the network model for identifying the egg sexes uses the improved SE layers and the depthwise separable convolution, so as to adapt to full-image input rather than solely average spectrum input. This innovation allows the network model for identifying the egg sexes to directly predict early embryo sexes using the original spectral images. Specifically, the SE layer captures the advantages of using the average spectra by focusing on an inter-channel relationship, in combination with first-order and second-order derivatives of the average spectra. Based on the importance of the channels extracted by the SE layers, the depthwise separable convolution further extracts image texture information and channel information, along with channel selection. This solves the problems of incapability of direct application to the spectral images, slow convergence, and excessive parameters of traditional deep learning.

The SE layer's channel attention mechanism is to first downsample each channel of a spectral image *Input* into a mean value *Spectrum_{avg}* by means of an *AvgPool*2*d* layer, then perform calculation to deduce a first-order derivative D₁ and a second-order derivative *D*₂ , subsequently, reasonably adjust and scale the first-order derivative and the second-order derivative by means of two fully connected layers (Linear and sigmoid) to obtain three 440-dimensional vectors: *Output_{avg}*, *Output*_{*d*1}, and *Output*_{*d*2}, sum these vectors to obtain a weight for each channel, and then multiply the weight with the corresponding channel of the original image to incorporate channel's importance features into the output data, which is finally output as *Output*. The calculation formula is as follows: ${Spectrum}_{avg} = AvgPool 2 d \left(Input\right)$ ${Output}_{d 1} = Linear \left(Relu\left(Linear\left(sigmoid\left(D1\left({Spectrum}_{avg}\right)\right)\right)\right)\right)$ ${Output}_{aνg} = Linear \left(Relu\left(Linear\left(sigmoid\left({Spectrum}_{aνg}\right)\right)\right)\right)$ ${Output}_{d 2} = Linear \left(Relu\left(Linear\left(sigmoid\left(D2\left({Spectrum}_{aνg}\right)\right)\right)\right)\right)$ $Output = Sigmoid \left({Output}_{d 1}+{Output}_{aνg}+{Output}_{d 2}\right) * Input$
where *Input* is an input spectral image; *AvgPool*2*d* is the mean value of all the pixels in a picture per channel; if there are n channels input, i.e. *Spectrum_{avg}* is an n-dimensional vector; D1 (*Spectrum_{avg}*) is to obtain a first-order derivative of *Spectrum_{avg}*, i.e. to subtract a previous value from a next value to obtain an (n-1)-dimensional vector padded with zeros to n dimensions; and also, D2 (*Spectrum_{avg}*) is to obtain a second-order derivative, i.e. to subtract a previous value of D1 (*Spectrum_{avg}*) from a next value of D1 (*Spectrum_{avg}*) to obtain an (n-2)-dimensional vector padded with zeros to n dimensions.

Additionally, *Sigmoid* is 1/(1+e-x), scaling data to 0 - 1; *Linear* is wX+b nonlinearly transforming the input, where w is a multiplication coefficient, and b is a bias; and *Relu* is an activation function, and its objective is to set an input number smaller than 0 as 0.

Based on the above, *Spectrum_{avg}* , D1 (*Spectrum_{avg}*), and D2 (*Spectrum_{avg}*) are used as inputs to obtain *Output_{avg}*, *Output*_{*d*1}, and *Output*_{*d*2}. Final *Output* is a product of a scaled sum of these three vectors and the original spectral image *Input*.

In training, parameters of fully connected layers are continuously updated alongside the network model for identifying the egg sexes, to ensure accurate extraction of the importance weights of the channels.

After the output data of the network model for identifying the egg sexes, passes through the SE layers, it maintains same dimensionality as input data. However, some unimportant channels contain some redundant information, and a data volume is too large to allow for subsequent processing. Therefore, the present invention uses the depthwise separable convolution (DWConv) to reduce the image channels. The depthwise separable convolution combines depthwise (DW) and pointwise (PW) components for feature extraction, offering a significantly lower parameter quantity and calculation cost compared with the conventional convolution.

In the depthwise separable convolution, one of the implementation is to first change the channel dimension to 32 via a pointwise convolution, subsequently apply a depthwise convolution to the 32 channels to extract the features from each channel, and then, perform another pointwise convolution to fuse inter-channel information, yielding a 32-channel output image.

A backbone network of the EggFormer model adopts the transferred Vision Transformer Base/16 (ViT-Base/16), which primarily consists of four components: Patch Embedding, Position and Class Embedding, Encoder Layers, and MLP head.

The Patch Embedding layer uses a convolution with a kernel_size and stride set as 16 to segment the input image into 14 * 14 pixel patches; and after the convolution, a number of channels is expanded from 32 to 768, resulting in an output image with dimensions being 768 * 14 * 14. Subsequently, flattened width and height dimensions become 768 * 196, i.e., 196 patches of 768 dimensions; class tokens are added in front of the patches, and position embeddings are added to the entire image to make the image contain position information; then, the processed image is sent into Encoder Layers containing 12 layers of Encoder to extract information; and finally, class tokens are extracted from all the patches, and are directly projected into binary classification by means of Linear in the MLP head, and prediction probabilities of corresponding classes are acquired via softmax.

S5: Interpreting and inferring key feature wavelengths based on the EggFormer model, and applying a wavelength combination to a detection platform for egg sex detection.

Specifically, by interpreting the internal mechanism of the model, i.e. the importance features of input wavelengths extracted by the SE layer's channel attention mechanism, key feature wavelengths are inferred. Based on the selected wavelengths, a reasonable combination is made to reduce a number of wavelengths while maintaining identification accuracy, thereby lowering an application cost and shortening a detection time. The method is subsequently applied to the detection platform for batch identification on the fertilized eggs.

Currently, mainstream machine learning methods used for dimension reduction are as follows:
(1) Random Forest (RF), where each tree is a decision maker, and a final prediction is achieved through voting among multiple decision makers.
(2) Principal Component Analysis (PCA) maps original data into a new coordinate system through linear transformation. The new coordinate system is selected based on maximizing a variance of the data or performing eigendecomposition on the data's covariance matrix.
(3) Successive Projections Algorithm (SPA) calculates a correlation by projecting vectors representing wavelengths onto other wavelengths and comparing projection sizes. It selects a combination of wavelength variables of minimal redundant information and minimal collinearity.
(4) Competitive Adaptive Reweighted Sampling (CARS) identifies a wavelength combination with an optimal prediction score through iterative cycles, based on an adaptive reweighted sampling technology.

The data subjected to dimension reduction using the 4 methods mentioned above are all classified using partial least squares discriminant analysis (PLS-DA). The model employs the mean value of three-fold cross-validation to calculate the indexes, and the optimal model is selected for interpretation and feature wavelength selection. It can be seen from the table below (titled: Model Comparison Table), RF achieves the highest accuracy of 93.9%, while the CARS's effect is the poorest, being 80.8%. The details are shown in Table 6:

**Table 6 Comparison Table for Multiple Models**

| Model | Input channel | Accuracy | Precision | Recall | F1 | Kappa | Training parameter quantity | Total parameter quantity |
|---|---|---|---|---|---|---|---|---|
| RF | All (440) | 0.939 | 0.931 | 0.957 | 0.943 | 0.877 | \ | \ |
| PCA-PLSDA | All (440) | 0.901 | 0.87 | 0.957 | 0.911 | 0.799 | \ | \ |
| SPA-PLSDA | All (440) | 0.893 | 0.795 | 0.943 | 0.863 | 0.673 | \ | \ |
| CARS-PLSDA | All (440) | 0.884 | 0.8 | 0.914 | 0.853 | 0.697 | \ | \ |
| ViT-Base | All (440) | 0.924 | 0.943 | 0.913 | 0.926 | 0.847 | 171.57M | 171.57M |
| | RF (219) | 0.931 | 0.943 | 0.928 | 0.935 | 0.862 | 128.12M | 128.12M |
| | PCA-PC1 (267) | 0.931 | 0.947 | 0.928 | 0.934 | 0.862 | 137.55M | 137.55M |
| | SPA (10) | 0.924 | **0.958** | 0.899 | 0.925 | 0.844 | 87.02M | **87.02M** |
| | CARS (25) | 0.939 | 0.908 | **0.986** | 0.945 | 0.876 | 89.97M | 89.97M |
| ViT-Base-Img21K | All (440) | 0.939 | 0.948 | 0.942 | 0.941 | 0.877 | 86.51M | 171.57M |
| | RF (219) | 0.939 | 0.932 | 0.957 | 0.942 | 0.877 | 43.06M | 128.12M |
| | PCA-PC1 (267) | 0.939 | 0.932 | 0.957 | 0.942 | 0.877 | 128.12M | 137.55M |
| | SPA (10) | 0.931 | 0.931 | 0.928 | 0.934 | 0.862 | **1.97M** | **87.02M** |
| | CARS (25) | 0.946 | 0.933 | 0.971 | 0.951 | 0.892 | 4.92M | 89.97M |
| EggFormer | All (440) | **0.954** | 0.933 | **0.986** | **0.958** | **0.908** | 6.60M | 91.66M |
| | RF (219) | 0.946 | 0.933 | 0.971 | 0.951 | 0.892 | 6.37M | 91.34M |
| | PCA-PC1 (267) | 0.946 | 0.933 | 0.971 | 0.951 | 0.892 | 6.41M | 91.47M |
| | SPA (10) | 0.916 | 0.957 | 0.885 | 0.918 | 0.832 | 6.30M | 91.35M |
| | CARS (25) | **0.954** | 0.933 | **0.986** | **0.958** | **0.908** | 6.30M | 91.35M |

By interpreting the 4 models, the Top 10 wavelengths ranked by contribution value are selected and listed in Table 7 below:

**Table 7 List of Top 10 Wavelengths Ranked by Contribution Value for 4 Models**

| Rank | RF | | PCA-PC1 | | SPA | | CARS | |
|---|---|---|---|---|---|---|---|---|
| | nm | Contribution value (%) | nm | Eigenvalue | nm | Coefficient | nm | Correlation |
| 1 | 712.76 | 4.42 | 706.94 | 0.095 | 810.73 | 0.36 | 402.67 | 1.88 |
| 2 | 714.22 | 4.1 | 708.39 | 0.095 | 515.08 | 0.29 | 413.41 | 1.71 |
| 3 | 765.33 | 3.96 | 705.48 | 0.095 | 522.09 | 0.21 | 448.68 | 1.38 |
| 4 | 722.97 | 3.68 | 709.85 | 0.095 | 406.69 | 0.12 | 481.69 | 1.35 |
| 5 | 763.87 | 3.22 | 704.03 | 0.094 | 432.34 | 0.10 | 522.09 | 1.33 |
| 6 | 720.05 | 2.76 | 711.31 | 0.094 | 571.51 | 0.07 | 439.13 | 1.28 |
| 7 | 717.13 | 2.66 | 702.57 | 0.094 | 408 | 0.07 | 424.21 | 1.28 |
| 8 | 702.57 | 2.52 | 712.76 | 0.094 | 994.74 | 0.06 | 429.62 | 1.26 |
| 9 | 718.59 | 2.51 | 701.12 | 0.094 | 495.56 | 0.02 | 408.03 | 1.25 |
| 10 | 698.21 | 2.37 | 714.22 | 0.093 | 936.61 | 0.01 | 390.65 | 1.22 |

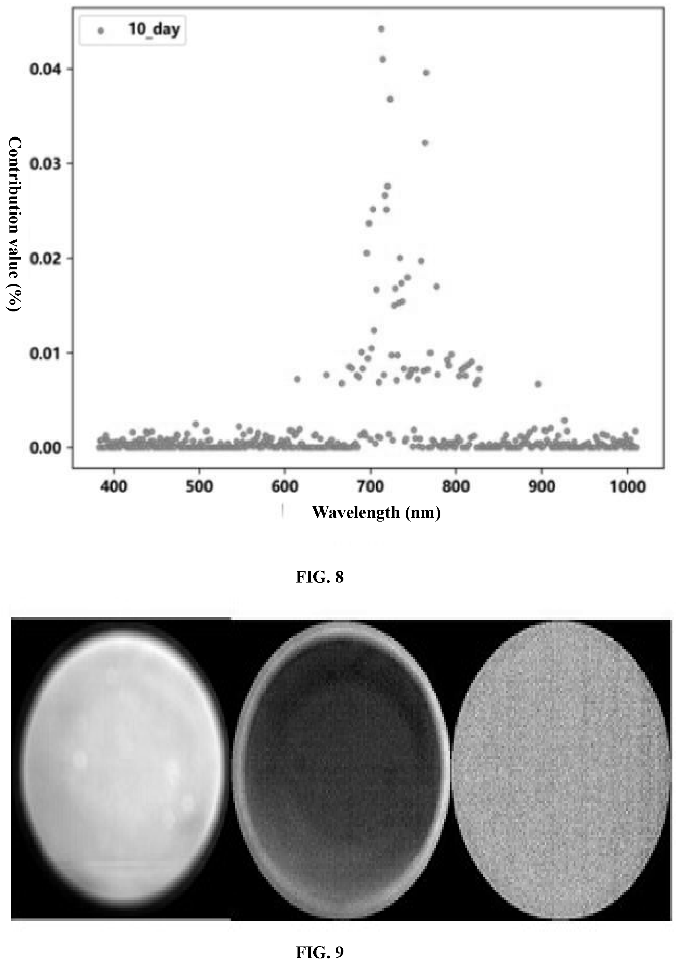

Random Forest reduces the input 440 wavelengths to 219 dimensions (setting a sum of contribution values of the extracted wavelengths as larger than 0.98), that is, a total feature importance of the 219 wavelengths accounts for 98%. Among them, 9 wavelengths accounts for more than 2.5%, and the wavelength of 712.76 nm holds a maximum contribution value of 4.42%. The top ten wavelengths with a highest proportion are distributed over a range from 698 nm to 765 nm. It can be seen from FIG. 8, a visualization view of RF wavelength contribution degrees, that wavelengths with the contribution values larger than 0.05 are distributed in over a range from 600 nm to 900 nm, corresponding to visible and near-infrared regions.

As for the Principal Component Analysis, a sum of the contribution values of the first 3 principal components (PC1-PC3) exceeds 99%, being 95.6%, 3%, and 1.1%, respectively. According to absolute values of the eigenvalues corresponding to the wavelengths in each principal component, the values of the corresponding channels are multiplied by the eigenvalues to draw the principal component diagrams PC1, PC2, and PC3 (see FIG. 9). It can be seen from analysis, PC1 shows a spectral image of an egg. Since a of an ROI for the egg is expanded by 10 pixels in ROI segmentation to retain more information, a small ring of noise information is clearly visible around a periphery of PC1 in FIG. 9. PC2 shows obvious noise, while in PC3 shows that granular noise has become mixed with an egg region. This noise is mainly generated in camera scanning. The top-10 wavelengths of PC1 are distributed over a range from 702 nm to 714 nm, and their feature vectors do not differ significantly.

The successive projections algorithm (SPA) yields 11 candidate wavelengths and selects 10 of them as final wavelengths, while the competitive adaptive reweighted sampling (CARS) selects 25 feature wavelengths. The wavelength ranges selected by the two algorithms are similar, with most of the wavelengths in a range from 400 nm to 600 nm and a few of them in a range from 800 nm to 1000 nm.

Since machine learning analyzes the average spectrum without containing the image texture information of the egg, it inevitably results in a loss of much effective information. To verify superiority of the EggFormer model and effectiveness of feature band selection by machine learning, full-channel pictures and pictures reconstructed from the selected feature wavelengths are used as inputs, respectively. They are compared using the publicly available ViT-Base model, the transferred ViT-Base model based on Img21K, and the EggFormer model. Experimental results are shown in the "Model Comparison Table."

In using the ViT-Base model, the accuracy of inputting all bands is the lowest (0.924), indicating that the ViT model has shortcomings in handling high-dimensional data. Although a number (10) of bands retained after SPA selection is fewer than that (10) after SPA selection CARS, the accuracy is lower, which may be due to a loss of some effective information in dimension reduction. CARS has advantages in both the number of the selected feature wavelengths and the accuracy, achieving the highest accuracy of 0.939. PCA-PC1 refers to selecting 267 wavelengths, whose feature vectors account for 0.98, from principal component 1 extracted by PCA. Its recognition effect is same as that of RF, and its number of the feature bands is also on the same order of magnitude as that of RF. The above phenomenon can also be observed in using the models ViT-Img21K and EggFormer.

First, if ViT is used without loading a pre-trained weight, its accuracy can only be the same as that of RF. However, it can be clearly observed that after loading of the pre-trained weight, the overall accuracy of ViT is increased, that is, the accuracy for full-band input is increased from 0.924 to 0.939. However, all the parameters in the model also become excessively large as the number of the bands increases, and the training parameters grow exponentially. The EggFormer model combines the SE layer's channel attention with PDConv, effectively addressing the problem of a too large number of the channels. Its accuracy for full-band input is 0.954, while both F1 score and kappa, two characterization comprehensive evaluation values, are the best among all models.

In addition, the EggFormer also has an advantage in terms of parameter quantity compared with ViT-Base and ViT-Base-21K. Its training parameters are substantially about 6.5 M, and all the parameters are about 91.5 M.

Interestingly, after first band selection with RF, PCA, and CARS, the EggFormer model still yields better results, indicating that EggFormer indeed extracts more potential information. Moreover, the spectral images can also capture more effective information than the average spectrum.

Meanwhile, in a case of a small number of bands, using SPA-selected bands as input leads to poorer results of EggFormer than ViT-Base-21K. This may be related to the fact that the number of bands is needed to be reduced by three-quarters first in combination with the SE layer's channel attention, thereby limiting the accuracy.

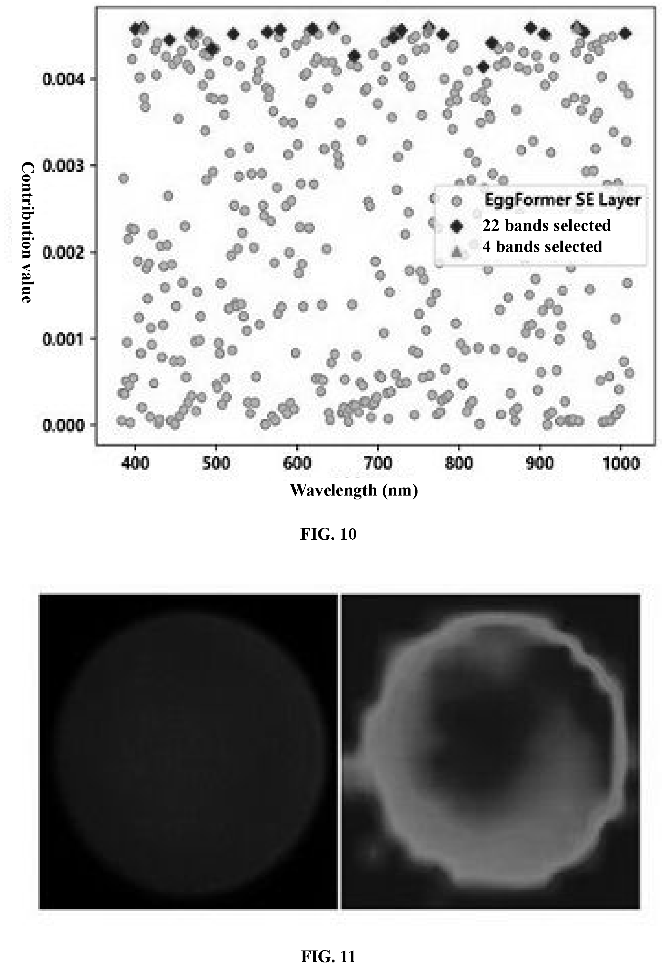

To acquire the feature bands with high weights from the EggFormer model, the SE layer's attention channel mechanism is further parsed. Output out layers are extracted and normalized, to draw a diagram as FIG. 10.

In FIG. 10, the wavelength contribution values are distributed across the full bands. To select a small number of effective bands, a certain interval is set for sampling, and a unique value is taken from the contribution values of the wavelengths within each interval in a descending order. When the sampling interval is set as a factor of 440 (1, 2, 4, 5, 10, 20, 22), a 4-band input is capable of maintaining the accuracy of 0.946 at 945.354 nm, 762.407 nm, 409.377 nm, and 644.587 nm. Meanwhile, in a case of a 22-band input, the EggFormer model still maintains the accuracy of 0.954, at the corresponding wavelengths (in nm): 945.354, 762.407, 409.377, 644.587, 888.39, 399.991, 618.669, 578.621, 728.801, 954.091, 562.989, 470.638, 1004.87, 904.482, 520.684, 779.97, 718.592, 441.857, 840.049, 494.166, 670.619, and 829.789.

To clarify the internal operating mechanism of the model, we have performed gradien-based visualization based on gradient-weighted class activation mapping (GradCAM), as shown in Figures 11 - 14. We have grasped an attention region of the model by means of the heatmap, where the redder the color is, the higher the attention level is.

When we select a last standardization layer of an encoder, it can be observed from prediction heatmaps for the two example eggs with one female egg and one male egg that the EggFormer model's attention level is substantially focused on an interior or an edge of each egg.

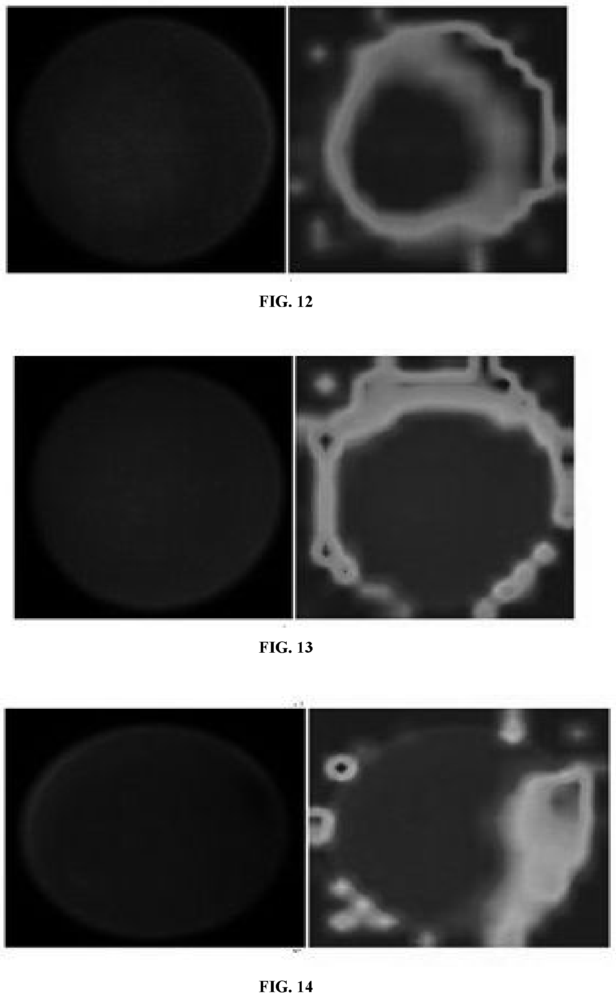

Taking female egg predictions in FIG. 11 and FIG. 12 as examples, the left side shows an image of RGB channels, as directly observed by a naked eye; while the right side shows the heatmap of the model's attention, where the redder the color is, the higher the attention level is, and the greater influence of the region on the model's prediction result is. It can be observed that after a hyperspectral image of the egg is input into the EggFormer model, the EggFormer model identifies the egg and classifies it as a female egg, at this time, the model's attention focuses mainly on a brighter region of the egg. Taking the female egg in FIG. 12 as an example, a central part of the egg appears obviously brighter in color.

In contrast, taking the male egg predictions in FIGs. 13 and 14 as examples, in the EggFormer model identifying a male egg, its attention will concentrate on the edge or a darker region inside the egg. In fact, it can also seen from the average spectral curves of the eggs that peak values of the average spectral curves of the male eggs are indeed lower than those of the female eggs.

The EggFormer model is capable of extracting potential information from the spectral images, enabling early-stage embryonic sex determination on eggs using fewer wavelengths, and being applied to production. Reduction in the number of the bands helps improve identification efficiency and reduction in cost in industrial application, thereby increasing economic revenues.

This embodiment further provides a system configured for non-destructive identification on egg sexes, which necessarily includes a memory capable of storing computer readable instructions; and a processor for executing the computer readable instructions.

The processor, when executing the computer readable instructions, is configured for: (1) segmenting regions of interest from collected spectral images. Here, the segmenting regions of interest includes the following steps: merging R, G, and B bands of the spectral images, selecting an egg range, and obtaining a grayscale image; and further processing the grayscale image to segment a spectral image of a regions of interest from an original spectral image. (2) Performing identification by the EggFormer model, referring to embodiments 1 - 5, and without elaboration here. (3) Interpreting and inferring key feature wavelengths by the EggFormer model, and detecting the egg sexes based on a wavelength combination.

To sum up, the present invention designs a novel network architecture EggFormer model, which can directly utilize the original image spectra as output, eliminating the disadvantages of an average spectrum method and addressing the deficiencies of the deep learning method; and compared with an existing method, it achieves a smaller error and higher accuracy rate. The present invention utilizes hyperspectral imaging for non-destructive detection, offering a low cost and a rapid detection speed; and EggFormer model can effectively addresses high-dimensionality of hyperspectral data and extract image texture information that is not contained in the average spectra. The classified images enable rapid and accurate sex determination of target objects, meeting the needs of production personnel. The present invention employs the computer device for achieving automatic identification, it only requires capturing the spectral images of the target objects using necessary hardware; and after spectral image uploading, it can give a precise classification result with a low level of human participation and a high automation degree. The present invention visualizes a classification process using the heatmaps, which align with the features extracted from different sex spectral images, demonstrating well robustness of the model method.

Compared with the prior art, the present invention enables accurate early-stage chicken embryo sex judgment based on the uploaded hyperspectral images, outperforming an existing algorithm in Accuracy, Recall, the Kappa value, and other evaluation standards. It effectively leverages the deep neural network to accomplish this task. In addition, the identification process is primarily autonomously accomplished by the device, achieving a high automation degree and significant reduction in both labor and time costs.

It should be noted that the above embodiments are only used to illustrate the technical solution of the present invention and are not for limitation. Although the present invention is described in detail with reference to the preferred embodiments, those of ordinary skill in the art should understand that the technical solutions of the present invention may be modified or replaced by equivalents without departing from the spirit and scope of the technical solutions of the present invention, and all those modifications or replacements should be included in the scope of the claims of the present invention.

## Claims

1. A network model for identifying egg sexes, comprising:
a first filtering layer (100) capable of selecting spectral image bands for features of fertilized eggs; and
a second filtering layer (200) capable of further extracting image features and channel features of the fertilized eggs.

2. The network model for identifying the egg sexes according to claim 1, wherein the first filtering layer (100) captures information about a potential inter-channel correlation in an average spectrum of a spectral image through a channel attention mechanism, assigning a greater weight to an important channel.

3. The network model for identifying the egg sexes according to claim 2, wherein the first filtering layer (100) is capable of performing following processing:
downsampling each channel of the spectral image into a mean value;
obtaining multi-dimensional vectors by performing an improvement operation;
obtaining a weight for each channel by summing the obtained vectors; and
multiplying the weight with each channel of an original spectral image with containing an importance feature of the channel in output data.

4. The network model for identifying the egg sexes according to any one of claims 1 - 3, wherein the first filtering layer (100) is a squeeze-and-excitation (SE) layer.

5. The network model for identifying the egg sexes according to claim 4, wherein the improvement operation is performed on the SE layer.

6. The network model for identifying the egg sexes according to any one of claims 3 or 5, wherein the improvement operation involves first-order and second-order derivative operations, specifically, $D {1}_{i} = \left\{\begin{matrix}{AνgP}_{i + 1} - {AνgP}_{i} & \left(i=0,1…,n-1\right) \\ 0 & \left(i=n\right)\end{matrix}\right.$ $D {2}_{i} = \left\{\begin{matrix}D {1}_{i + 1} - D {1}_{i} & \left(i=0,1…,n-2\right) \\ 0 & \left(i=n-1,n\right)\end{matrix}\right.$ wherein *AvgPᵢ* is a mean value of an *i*^{th} channel image; *n* is a number of channels of the spectral image; *D*1*ᵢ* is a first-order derivative corresponding to an *i*^{th} channel; and *D*2*ᵢ* is a second-order derivative corresponding to the *i*^{th} channel.

7. The network model for identifying the egg sexes according to any one of claims 1, 2, 3, or 5, wherein the second filtering layer (200) is capable of further extracting image texture information and channel information, and reducing the channel features.

8. The network model for identifying the egg sexes according to claim 7, wherein the second filtering layer (200) is capable of performing following processing:
reducing a channel dimension by means of pointwise convolution;
extracting an image feature inside each channel by means of depthwise convolution on the channel with the reduced dimension; and
fusing inter-channel information by means of another pointwise convolution to obtain an output image of the channel with the reduced dimension.

9. The network model for identifying the egg sexes according to any one of claims 1, 2, 3, 5 or 8, wherein the second filtering layer (200) is a depthwise separable convolution layer.

10. A method for constructing a network model for identifying egg sexes, comprising:
selecting image feature bands of fertilized eggs; and
further extracting image features and channel features of the fertilized eggs.

11. The method for constructing the network model for identifying the egg sexes according to claim 10, wherein the selecting image feature bands of fertilized eggs comprises:
downsampling each channel of a spectral image into a mean value;
obtaining multi-dimensional vectors by performing an improvement operation;
obtaining a weight for each channel by summing the obtained vectors; and
multiplying the weight with each channel of an original spectral image with containing an importance feature of the channel in output data.

12. The method for constructing the network model for identifying the egg sexes according to any one of claims 10 or 11, wherein the selecting image feature bands of fertilized eggs is enabled by means of an SE layer.

13. The method for constructing the network model for identifying the egg sexes according to claim 12, wherein the improvement operation is performed on the SE layer.

14. The method for constructing the network model for identifying the egg sexes according to any one of claims 11 or 13, wherein the improvement operation involves first-order and second-order derivative operations, specifically, $D {1}_{i} = \left\{\begin{matrix}{AνgP}_{i + 1} - {AνgP}_{i} & \left(i=0,1…,n-1\right) \\ 0 & \left(i=n\right)\end{matrix}\right.$ $D {2}_{i} = \left\{\begin{matrix}D {1}_{i + 1} - D {1}_{i} & \left(i=0,1…,n-2\right) \\ 0 & \left(i=n-1,n\right)\end{matrix}\right.$ wherein *AvgPᵢ* is a mean value of an *i*^{th} channel image; *n* is a number of channels of the spectral image; *D*1*ᵢ* is a first-order derivative corresponding to an *i*^{th} channel; and *D*2*ᵢ* is a second-order derivative corresponding to the *i*^{th} channel.

15. The method for constructing the network model for identifying the egg sexes according to any one of claims 10, 11 or 13, wherein the further extracting image features and channel features of the fertilized eggs and selecting the channel features comprises:
reducing a channel dimension by means of pointwise convolution;
extracting a feature inside each channel by means of depthwise convolution on the channel with the reduced dimension; and
fusing inter-channel information by means of another pointwise convolution to obtain an output image of the channel with the reduced dimension.

16. The method for constructing the network model for identifying the egg sexes according to any one of claims 10, 11 or 13, wherein the further extracting image features and channel features of the fertilized eggs is enabled by means of a depthwise separable convolution layer.

17. The method for constructing the network model for identifying the egg sexes according to any one of claims 10, 11 or 13 wherein the network model is trained and evaluated.

18. The method for constructing the network model for identifying the egg sexes according to claim 17, comprising the training includes: fitting an optimization model using a loss function, $criterion = {W}_{1} CrossEntropyLoss \left(\right) + {W}_{2} Waste _ Ratio + {W}_{3} Kappa + {W}_{4} {F}_{1}$ $CrossEntropyLoss = - \frac{1}{N} {Σ}_{i = 1}^{N} {Σ}_{j = 1}^{C} {y}_{ij} log \left({\hat{y}}_{ij}\right)$ $WasteRatio = \left({P}_{f}*FP\right) / \left({P}_{mn}*TP\right)$
where *CrossEntropyLoss* is a cross entropy loss; *WasteRatio* is a cost of wasted female eggs per average identified male egg; *Kappa* and *F*₁ are evaluation indexes used respectively; *Wᵢ*(*i*=1...4) refers to a weight of a corresponding parameter; *N* is a number of samples; *C* is a number of currently classified classes; *yᵢⱼ* is a value of class *j* for a true label of sample *i*; *ŷᵢⱼ* is a prediction probability of the class *j* in corresponding probability distribution, output by the model, of the sample *i*; *FP* is a number of female eggs identified as male eggs; TP is a number of correctly identified male eggs; *P_{f}* is a price coefficient for incubating female chicks; and *Pₘₙ* is a price coefficient for male eggs selected in advance on day *n*; and
obtaining a classification result by means of judgment of the optimization model, then performing comparison based on the true label and the classification result, performing calculation to obtain a result by using the loss function, and calculating a gradient by means of backpropagation.

19. The method for constructing the network model for identifying the egg sexes according to claim 18, wherein the evaluating is performed by using the following formula: $OA = \frac{TP + TN}{TP + FN + FP + TN} AA = \frac{1}{2} ∗ \frac{TP}{TP + FN} ∗ \frac{TN}{TN + FP}$
where *OA* represents overall accuracy; *AA* represents average accuracy; *TP* is a number of samples correctly predicted as positive; *TN* is a number of samples correctly predicted as negative; *FN* is a number of samples incorrectly predicted as negative; and *FP* is a number of samples incorrectly predicted as positive, $Kappa = \frac{OA - PE}{1 - PE} PE = \frac{\left(TN+FN\right) * \left(TN+FP\right) + \left(TP+FN\right) * \left(TP+FP\right)}{{\left(TN+FN++TP+FP\right)}^{2}}$
where *PE* is an expected random consistency probability, $F 1 = 2 * \frac{Precision * Recall}{Precision + Recall} Recall = \frac{TP}{TP + FN} Precision = \frac{TP}{TP + FP}$
where *Recall*and *Precision* are a recall rate and a precision rate respectively.

20. A method configured for non-destructive identification on egg sexes, comprising:
collecting spectral images of fertilized eggs;
segmenting regions of interest from collected images, and
constructing a network model according to any one of claims 1 - 9:
to interpret and infer key feature wavelengths based on the network model, and detecting the egg sexes based on a wavelength combination.

21. The method configured for non-destructive identification on the egg sexes according to claim 20, wherein the segmenting regions of interest from collected images comprises the following steps:
merging the R, G, and B bands of the images, selecting an egg range, and obtaining a grayscale image; and
further processing the grayscale image to segment a spectral image of an egg region from an original spectral image.

22. A system configured for non-destructive identification on egg sexes, comprising:
a memory, storing computer readable instructions; and
a processor, when executing the computer readable instructions, configured for:
segmenting regions of interest from collected images, and
using the network model according to any one of claims 1 - 9:
to interpret and infer key feature wavelengths based on the network model, and detecting the egg sexes based on a wavelength combination.

23. The system configured for non-destructive identification on the egg sexes according to claim 22, wherein the segmenting regions of interest from collected images comprises the following steps:
merging the R, G, and B bands of the images, selecting an egg range, and obtaining a grayscale image; and
further processing the grayscale image to segment a spectral image of an egg region from an original spectral image.

## Amended claims

### Amended claims under Art. 19.1 PCT

1. A network model for identifying egg sexes, comprising:
a first filtering layer (100) capable of selecting spectral image bands for features of fertilized eggs; and
a second filtering layer (200) capable of further extracting image features and channel features of the fertilized eggs.

2. The network model for identifying the egg sexes according to claim 1, wherein the first filtering layer (100) captures information about a potential inter-channel correlation in an average spectrum of a spectral image through a channel attention mechanism, assigning a greater weight to an important channel.

3. The network model for identifying the egg sexes according to claim 2, wherein the first filtering layer (100) is capable of performing following processing:
downsampling each channel of the spectral image into a mean value;
obtaining multi-dimensional vectors by performing an improvement operation;
obtaining a weight for each channel by summing the obtained vectors; and
multiplying the weight with each channel of an original spectral image with containing an importance feature of the channel in output data.

4. The network model for identifying the egg sexes according to claim 3, wherein the first filtering layer (100) is a squeeze-and-excitation (SE) layer.

5. The network model for identifying the egg sexes according to claim 4, wherein the improvement operation is performed on the SE layer.

6. The network model for identifying the egg sexes according to claim 5, wherein the improvement operation involves first-order and second-order derivative operations, specifically, $D {1}_{i} = \left\{\begin{matrix}{AvgP}_{i + 1} - {AvgP}_{i} & \left(i=0,1…,n-1\right) \\ 0 & \left(i=n\right)\end{matrix}\right.$ $D {2}_{i} = \left\{\begin{matrix}D {1}_{i + 1} - D {1}_{i} & \left(i=0,1…,n-2\right) \\ 0 & \left(i=n-1,n\right)\end{matrix}\right.$ wherein *AvgPᵢ* is a mean value of an *i*^{th} channel image; *n* is a number of channels of the spectral image; *D*1*ᵢ* is a first-order derivative corresponding to an *i*^{th} channel; and *D*2*ᵢ* is a second-order derivative corresponding to the *i*^{th} channel.

7. The network model for identifying the egg sexes according to claim 5, wherein the second filtering layer (200) is capable of further extracting image texture information and channel information, and reducing the channel features.

8. The network model for identifying the egg sexes according to claim 7, wherein the second filtering layer (200) is capable of performing following processing:
reducing a channel dimension by means of pointwise convolution;
extracting an image feature inside each channel by means of depthwise convolution on the channel with the reduced dimension; and
fusing inter-channel information by means of another pointwise convolution to obtain an output image of the channel with the reduced dimension.

9. The network model for identifying the egg sexes according to claim 8, wherein the second filtering layer (200) is a depthwise separable convolution layer.

10. A method for constructing a network model for identifying egg sexes, comprising:
selecting image feature bands of fertilized eggs; and
further extracting image features and channel features of the fertilized eggs.

11. The method for constructing the network model for identifying the egg sexes according to claim 10, wherein the selecting image feature bands of fertilized eggs comprises:
downsampling each channel of the spectral image into a mean value;
obtaining multi-dimensional vectors by performing an improvement operation;
obtaining a weight for each channel by summing the obtained vectors;
multiplying the weight with each channel of an original spectral image with containing an importance feature of the channel in output data.

12. The method for constructing the network model for identifying the egg sexes according to claim 11, wherein the selecting image feature bands of fertilized eggs is enabled by means of an SE layer.

13. The method for constructing the network model for identifying the egg sexes according to claim 11, wherein the further extracting image features and channel features of the fertilized eggs and selecting the channel features comprises:
reducing a channel dimension by means of pointwise convolution;
extracting a feature inside each channel by means of depthwise convolution on the channel with the reduced dimension; and
fusing inter-channel information by means of another pointwise convolution to obtain an output image of the channel with the reduced dimension.

14. A system configured for non-destructive identification on egg sexes, comprising:
a memory, storing computer readable instructions; and
a processor, when executing the computer readable instructions, configured for:
segmenting regions of interest from collected images, and
using the network model according to any one of claims 1 - 9:
to interpret and infer key feature wavelengths based on the network model, and detecting the egg sexes based on a wavelength combination.

15. The system configured for non-destructive identification on the egg sexes according to claim 14, wherein the segmenting regions of interest from collected images comprises the following steps:
merging the R, G, and B bands of the images, selecting an egg range, and obtaining a grayscale image; and
further processing the grayscale image to segment a spectral image of an egg region from an original spectral image.
